# EUROPEAN PATENT APPLICATION

(11) **EP 1 236 619 A1**
(43) Date of publication of application: **04.09.2002**
(21) Application number: 00969947.1
(22) Date of filing: 20.10.2000
(51) Int. Cl.: B60R 13/06

(54) **RESIN PART, RESIN PART ENGAGING METHOD, AND RESIN PART ENGAGING STRUCTURE**

(30) Priority: 05.11.1999 JP 31506899
(71) Applicant: TOYOTA JIDOSHA KABUSHIKI KAISHA, Toyota-shi, Aichi 471-8571 (JP)
(72) Inventor: HIRAYAMA, Yumi, Toyota-shi Aichi 471-8571 (JP); IMAYOSHI, Kiyoyuki, Toyota-shi Aichi 471-8571 (JP)
(74) Representative: Pellmann, Hans-Bernd, Dipl.-Ing.
(86) International application number: JP0007328
(87) International publication number: WO01034434

(57) **Abstract**

Load required at a time of mounting is made small and engaging force is made large, and both an improvement in workability of a mounting operation and reliable prevention of coming off after mounting are achieved.

At an inner side of a U-shaped portion 12 of a weather strip 10, a nipping tubular portion 20 having a hollow portion 24, and nipping lip portions 22 project so as to oppose one another. A communicating hole 28, which communicates the hollow portion 24 with an exterior, is formed in the nipping tubular portion 20. Pressure of an interior of the hollow portion 24 is reduced by a pressure reducing device, and a clearance 30, which is larger than a plate thickness of a body flange 84, is formed. Thus, load required for fitting (load required at the time of mounting) is reduced. When the interior of the hollow portion 24 is restored to atmospheric pressure, a projecting end 20A of the nipping tubular portion 20 is strongly press-fit to the body flange 84. The load required at the time of mounting and an engaging force can be set independently, and an insertion load (the load required at the time of mounting) can be made small and the engaging force can be made large. Thus, an improvement in workability of the mounting operation and prevention of the weather strip 10 from coming off can both be achieved at high levels.

## Description

### TECHNICAL FIELD

The present invention relates to a resin part, a resin part engaging structure, and a resin part engaging method, and is applicable to a resin part such as, for example, a sealing member for a vehicle cover or a trim for a vehicle opening or the like, and to a resin part engaging structure and a resin part engaging method for engaging these resin parts to a vehicle.

### BACKGROUND TECHNOLOGY

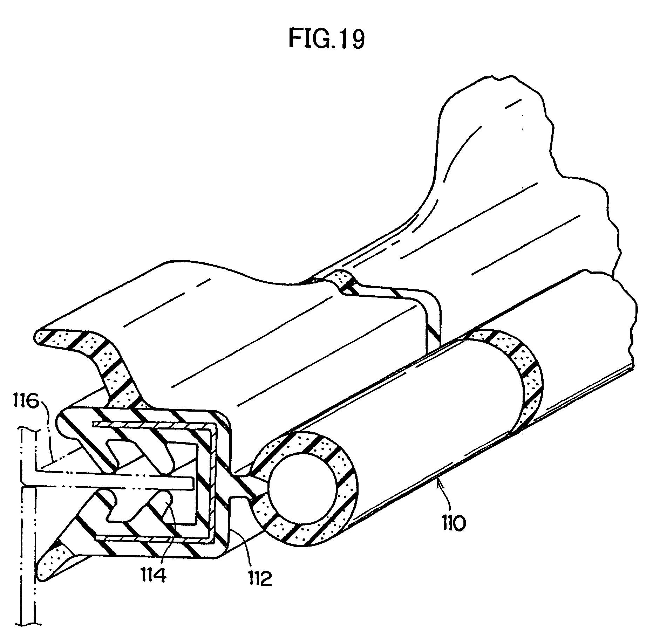

Fig. 19 shows a state in which a weather strip 110 for a vehicle, which serves as an example of a conventional resin part, is mounted to a vehicle body panel flange 116.

Nipping lip portions 114 project at an inner side of a U-shaped nipping portion 112 of the weather strip 110. When the weather strip 110 is mounted to a vehicle body panel, the nipping lip portions 114 are elastically deformed and are fit to the vehicle body panel flange 116. Then, in the state in which the weather strip 110 is mounted, the nipping lip portions 114 nip the vehicle body panel flange 116 due to the elastic force (the force of attempting to return to the configuration before elastic deformation) of the nipping lip portions 114.

In this way, at the conventional weather strip 110, the nipping lip portions 114 are elastically deformed and are made to engage with the vehicle body panel flange 116 (member to be engaged) . Thus, at the time of mounting, a load which is sufficient to elastically deform the nipping lip portions 114 (load required at the time of mounting) is needed, and the mounting workability is poor. Further, in order to prevent the weather strip 110 from inadvertently coming off of the vehicle body panel flange 116, it is desirable to make large the elastic force of the nipping lip portions 114 (the engaging force of the nipping lip portions 114 with respect to the vehicle body panel flange 116, in other words, the load needed to remove the weather strip 110). However, when the engaging force of the nipping lip portions 114 is made large in this way, the load required at the time of mounting is also large.

In order to prevent such a deterioration in the mounting workability, for example, making the engaging force of the nipping lip portions 114 small has been contemplated. However, when the engaging force of the nipping lip portions 114 is made small, it is easy for the weather strip 110 to come off of the vehicle body panel flange 116. Namely, it has been difficult to achieve improvements in both the mounting workability and the engaging force.

Such a drawback is not limited to the above-described weather strip 110, and is a problem generally had by resin parts at which plate-shaped engaging portions such as the nipping lip portions 114 are flexurally deformed, and which are engaged with a member to be engaged due to this elastic force.

### DISCLOSURE OF THE INVENTION

The present invention takes the above-described circumstances into consideration, and an object is to provide a resin part which has a small load required at the time of mounting and a large engaging force and in which it is possible to achieve both an improvement in workability at the time of the mounting operation and a difficulty in coming off of a member to be engaged after mounting, and to a resin part engaging method and a resin part engaging structure for engaging the resin part to a member to be engaged.

The invention recited in claim 1 is a resin part having an engaging portion which is engageable with a member to be engaged, the engaging portion having at least one expanding-and-contracting portion which is expandable and contractible, wherein, due to the expanding-and-contracting portion expanding and contracting, the expanding-and-contracting portion varies between: an engagement state which is a state in which the engaging member is engageable with the member to be engaged; and a withdrawn state which is a state in which the engaging member is not engageable with the member to be engaged.

In the invention recited in claim 2, in the invention recited in claim 1, the expanding-and-contracting portion includes a hollow portion.

In the invention recited in claim 3, in the invention recited in claim 2, the expanding-and-contracting portion expands and contracts due to a fluid flowing into and flowing out from an interior of the hollow portion.

In the invention recited in claim 4, in the invention recited in claim 2, the expanding-and-contracting portion has a communicating hole which communicates the hollow portion and an exterior.

In the invention recited in claim 5, in the invention recited in claim 2, the engaging portion has a plurality of expanding-and-contracting portions, and the engaging portion engages with the member to be engaged due to the member to be engaged being nipped by the plurality of expanding-and-contracting portions.

In the invention recited in claim 6, in the invention recited in claim 5, at least any one of the plurality of expanding-and-contracting portions has a communicating hole which communicates the hollow portion and an exterior.

In the invention recited in claim 7, in the invention recited in claim 5, the engaging portion has a connecting portion which connects respective hollow portions of the plurality of expanding-and-contracting portions.

In the invention recited in claim 8, in the invention recited in claim 7, at least any one of the plurality of expanding-and-contracting portions has a communicating hole which communicates the hollow portion and an exterior.

In the invention recited in claim 9, in the invention recited in claim 1, the expanding-and-contracting portion is formed of a material which is elastically deformable.

In the invention recited in claim 10, in the invention recited in claim 2, in a case in which pressure within the hollow portion is substantially atmospheric pressure, the expanding-and-contracting portion is set in the engagement state.

In the invention recited in claim 11, in the invention recited in claim 1, the engaging portion has at least one nipping portion, and the engaging portion engages with the member to be engaged due to the member to be engaged being nipped by the expanding-and-contracting portion and the nipping portion.

In the invention recited in claim 12, in the invention recited in claim 11, at least one nipping portion is a nipping lip portion which is formed in a flexurally deformable substantial plate-shape, and which, by elastic force of flexural deformation and together with the expanding-and-contracting portion, nips the member to be engaged.

In the invention recited in claim 13, in the invention recited in claim 4, the expanding-and-contracting portion is the engaging portion, and the hollow portion also serves as the communicating hole.

In the invention recited in claim 14, in the invention recited in claim 1, the resin part is a sealing member for a vehicle cover which seals between a cover provided at a vehicle and the vehicle.

In the invention recited in claim 15, in the invention recited in claim 1, the resin part is a trim for a vehicle opening which is disposed at an opening provided at a vehicle.

The invention recited in claim 16 is a resin part engaging method for engaging, to a member to be engaged, a resin part having an engaging portion which is engageable with the member to be engaged, the engaging portion having at least one expanding-and-contracting portion, and due to the expanding-and-contracting portion expanding and contracting, the expanding-and-contracting portion varies between an engagement state which is a state in which the engaging member is engageable with the member to be engaged, and a withdrawn state which is a state in which the engaging member is not engageable with the member to be engaged, said method comprising: a withdrawing step of varying the expanding-and-contracting portion to the withdrawn state; an installing step of installing the resin part to the member to be engaged, when the expanding-and-contracting portion is in the withdrawn state; and an engaging step of varying, to the engagement state, the expanding-and-contracting portion of the resin part which is installed at the member to be engaged.

In the invention recited in claim 17, in the invention recited in claim 16, the withdrawing step is a flow out step of varying the expanding-and-contracting portion to the withdrawn state by making fluid of the hollow portion included in the expanding-and-contracting portion flow out, and the engaging step is a flow in step of varying the expanding-and-contracting portion to the engagement state by making fluid flow into the hollow portion.

In the invention recited in claim 18, in the invention recited in claim 17, the flow out step makes fluid of the hollow portion flow out from a communicating hole which communicates the hollow portion and an exterior, and the flow in step makes fluid flow into the hollow portion from the communicating hole.

In the invention recited in claim 19, the invention recited in claim 16 further comprises a communicating hole forming step of forming a communicating hole which communicates the hollow portion and an exterior.

In the invention recited in claim 20, in the invention recited in claim 18, the flow out step is a pressure reducing step of reducing pressure within the hollow portion by principles of spraying.

In the invention recited in claim 21, in the invention recited in claim 18, the flow in step is an atmospheric pressure restoring step which makes pressure within the hollow portion substantially atmospheric pressure.

The invention recited in claim 22 is a resin part engaging structure for engaging, to a member to be engaged, a resin part having an engaging portion which is engageable with the member to be engaged, the engaging portion having at least one expanding-and-contracting portion, and due to the expanding-and-contracting portion expanding and contracting, the expanding-and-contracting portion varies between an engagement state which is a state in which the engaging member is engageable with the member to be engaged, and a withdrawn state which is a state in which the engaging member is not engageable with the member to be engaged, and the expanding-and-contracting portion includes a hollow portion, wherein the expanding-and-contracting portion is varied to the withdrawn state due to fluid within the hollow portion flowing out, and after installation to the member to be engaged, the expanding-and-contracting portion is varied to the engaged state due to fluid flowing into the hollow portion, and is engaged to the member to be engaged.

In the invention recited in claim 1, the engaging portion has at least one expanding-and-contracting portion, and the expanding-and-contracting portion can expand and contract. In this way, the expanding-and-contracting portion can vary to the engagement state and the withdrawn state. Due to the expanding-and-contracting portion being set in the engagement state, the engaging member is set in an engageable state with the member to be engaged. Due to the expanding-and-contracting portion being set in the withdrawn state, the engaging member is set in a state at which engagement with the member to be engaged is not possible. In this way, the expanding-and-contracting portion is varied to the withdrawn state and the resin part is installed at the member to be engaged, and in the installed state, the expanding-and-contracting portion is varied to the engagement state and the resin part engages the member to be engaged. Thus, even if the engaging force of the resin part is set to be large, the load required at the time of mounting can be set small without being affected thereby. Namely, it is possible to establish both a small load required at the time of mounting and a large engaging force, and both prevention of the coming off of the resin part and an improvement in the mounting workability can be achieved.

In the invention recited in claim 2, due to the expanding-and-contracting portion including the hollow portion, expansion and contraction of the expanding-and-contracting portion is easy.

In the invention recited in claim 3, because the expanding-and-contracting portion expands and contracts due to fluid flowing into and flowing out from the interior of the hollow portion, expansion and contraction of the expanding-and-contracting portion can be carried out easily.

In the invention recited in claim 4, due to the hollow portion expanding and contracting, the expanding-and-contracting portion can vary between the engagement state and the withdrawn state. Then, by varying the expanding-and-contracting portion to the withdrawn state, at the time of installation, the expanding-and-contracting portion is in a state of being separated from the member to be engaged, and the resin part can be installed at the member to be engaged by a small force required at the time of mounting. Further, when the expanding-and-contracting portion is varied to the withdrawn state, by making the fluid within the hollow portion flow out to the exterior by the communicating hole, the hollow portion can be contracted. Thus, the expanding-and-contracting portion can be easily varied to the withdrawn state.

In the state in which the resin part is installed at the member to be engaged, the expanding-and-contracting portion is varied to the engagement state. The engaging portion thereby engages the member to be engaged. At this time, by making fluid flow into the hollow portion by the communicating hole, the hollow portion is extended, and the expanding-and-contracting portion is varied to the engagement state.

In this way, the expanding - and-contracting portion is varied to the withdrawn state and the resin part is installed at the member to be engaged, and in the installed state, the expanding-and-contracting portion is varied to the engagement state and the resin member is made to engage the member to be engaged. Thus, even if the engaging force of the resin part is set to be large, the load required at the time of mounting can be set to be small without being affected thereby. Namely, it is possible to establish both a small load required at the time of mounting and a large engaging force, and both prevention of the coming off of the resin part and an improvement in the mounting workability can be achieved.

Further, as is recited in claim 5, the engaging portion may be formed to have a plurality of expanding-and-contracting portions. In this structure, the member to be engaged is nipped by the plurality of expanding-and-contracting portions. Further, in this structure, as is recited in claim 6, all of the plurality of expanding-and-contracting portions may have communicating holes, or it is possible for only one of the plurality of expanding-and-contracting portions to have a communicating hole. In this way, at least one expanding-and-contracting portion can be set in the withdrawn state. Further, as is recited in claim 7, respective hollow portions of the plurality of expanding-and-contracting portions may be connected by a connecting portion. In this way, fluid in the respective hollow portions of the plurality of expanding-and-contracting portions can be made to flow out merely by forming a communicating hole in one of the plurality of expanding-and-contracting portions.

In the invention of claim 9, by elastically deforming the expanding-and-contracting portion, the expanding-and-contracting portion can be easily varied between the engagement state and the withdrawn state.

In the invention of claim 10, the expanding-and-contracting portion can be elastically deformed, air can be made to flow out from the communicating hole, the hollow portion can be contracted, and the expanding-and-contracting portion can be set in the withdrawn state. Note that the operation for making the fluid flow out from the communicating hole may be reducing pressure by removing the air from the hollow portion actively by using a pressure reducing device, or may be pushing and collapsing the expanding-and-contracting portion from the exterior such that, as a result, air is made to flow out from the communicating hole.

After the resin part is installed at the member to be engaged, the communicating hole is opened and the interior of the hollow portion is made to be substantially atmospheric pressure. In this way, the expanding-and-contracting portion is varied to the engagement state by elastic force, and engages the member to be engaged. Because no operation for actively varying the engaging portion to the engagement state is required (merely the operation of opening the communicating hole is required), no particular (complex) operation or device is required, and the mounting operation of the resin part is even easier.

In the invention recited in claim 11, the engaging portion has at least one nipping portion (e.g., as in the invention recited in claim 12, a nipping lip portion which is formed in a flexurally deformable substantial plate-shape). In this way, the engaging portion can nip the member to be engaged by the expanding-and-contracting portion and the nipping portion.

Accordingly, by changing the configuration (the length or the thickness or the like) of the nipping portion, the elastic force of the flexural deformation can be varied. Thus, fine adjustment of the nipping force which nips the member to be engaged is possible, and fine adjustment of the load required at the time of mounting the engaging force is possible. Further, even in cases in which the configuration of the member to be engaged is not uniform or the like, by changing the configuration of the nipping portion in accordance therewith, a sufficient engaging force can be obtained.

Further, as in the invention recited in claim 13, the engaging portion itself may be a structure which expands and contracts, and the hollow portion may be a structure which serves as the communicating hole as well.

The resin part recited in any of claims 1 through 13 can be used in various applications. For example, as recited in claim 14, the resin part can be used as a sealing member for a vehicle cover which seals between a cover provided at a vehicle and the vehicle, or as recited in claim 15, the resin part can be used as a trim for a vehicle opening which is disposed at an opening provided at a vehicle, and the resin part has high applicability.

In the invention of claim 16, the expanding-and-contracting portion is varied to the withdrawn state in the withdrawing step. Thus, in the installing step, the resin part can be installed at the member to be engaged by a small load required at the time of mounting. Further, in the engaging step, by varying the expanding-and-contracting portion from the withdrawn state to the engagement state, the engaging portion is engageable with the member to be engaged. Thus, even if the engaging force is set to be large, the load required at the time of mounting can be made to be small without being affected thereby. Namely, it is possible to establish both a small load required at the time of mounting and a large engaging force, and both prevention of the coming off of the resin part and an improvement in the mounting workability can be achieved.

Further, as in the invention recited in claim 17, in a case in which the expanding-and-contracting portion has a hollow portion, the withdrawing step may be a flow out step of varying the expanding-and-contracting portion to the withdrawn state by making fluid of the hollow portion included in the expanding-and-contracting portion flow out, and the engaging step may be a flow in step of varying the expanding-and-contracting portion to the engagement state by making fluid flow into the hollow portion.

Further, as in the invention recited in claim 18, in a case in which a communicating hole which communicates the hollow portion and the exterior is formed in the expanding-and-contracting portion, the fluid in the hollow portion may be made to flow in and flow out from the communicating hole.

Namely, because the expanding-and-contracting portion is varied to the withdrawn state by the flow out step, in the installing step, the resin part can be installed to the member to be engaged by a small load required at the time of mounting. Further, in the flow out step, by making the air within the hollow portion flow out to the exterior by the communicating hole, the hollow portion can be contracted. Thus, the expanding-and-contracting portion can be varied to the withdrawn state by a small force.

After the resin part has been installed at the member to be engaged in the installing step, when, in the flow in step, fluid is made to flow in from the communicating hole and the expanding-and-contracting portion of the resin part which is installed at the member to be engaged is varied to the engagement state, the engaging portion engages the member to be engaged. In the flow in step, by making air flow into the hollow portion by the communicating hole, the hollow portion is extended, and the expanding-and-contracting portion can be varied to the engagement state.

Further, the varying of the expanding-and-contracting portion to the withdrawn state is easy by applying existing equipment, such as using a generally-used pressure reducing device (a pump or the like) . As a result, applicability of existing equipment is broadened.

In this way, in the state in which the expanding-and-contracting portion is varied to the withdrawn state in the flow out step, the resin part is installed at the member to be engaged in the installing step, and in the flow in step, the expanding-and-contracting portion is varied to the engagement state and the resin part is engaged with the member to be engaged. Thus, even if the engaging force is set to be large, the load required at the time of mounting can be made to be small without being affected thereby. Namely, it is possible to establish both a small load required at the time of mounting and a large engaging force, and both prevention of the coming off of the resin part and an improvement in the mounting workability can be achieved.

The invention of claim 19 further has a communicating hole forming step for forming a communicating hole which communicates the hollow portion and the exterior. Thus, even in cases in which no communicating hole has been formed in the expanding-and-contracting portion, a communicating hole can be formed in the communicating hole forming step.

The principles of spraying used in the invention recited in claim 20 are applied to pressure reducing devices and the like which are widely used conventionally. Namely, by using existing equipment, the pressure of the interior of the hollow portion can be reduced and the hollow portion contracted, such that the expanding-and-contracting portion can be varied to the withdrawn state. Thus, no special device or equipment is required for varying the expanding-and-contracting portion to the withdrawn state.

In the invention recited in claim 21, the flow in step is an atmospheric pressure restoring step in which the pressure in the hollow portion is made to be substantially atmospheric pressure. Accordingly, even if the expanding-and-contracting portion is not actively varied to the engagement state, the interior of the hollow portion can simply be restored to atmospheric pressure by the atmospheric pressure restoring step, and the expanding-and-contracting portion can thereby be varied to the engagement state by elastic force. No special device or equipment is required in order to vary the expanding-and-contracting portion to the engagement state, and energy required therefor is not needed. Thus, the resin part can be engaged to the member to be engaged at a low cost.

In the invention of claim 22, in this way, the fluid is made to flow out, and at the time of installation, the expanding-and-contracting portion is set in a state of being withdrawn from the member to be engaged. Thus, the resin part can be installed at the member to be engaged by a small force required at the time of mounting. Then, after the resin part is installed, by making fluid flow into the hollow portion, the expanding-and-contracting portion is varied to the engagement state, and the engaging portion thereby engages the member to be engaged. Thus, even if the engaging force of the engaging portion is set to be large, the load required at the time of mounting can be made to be small without being affected thereby. Namely, it is possible to establish both a small load required at the time of mounting and a large engaging force, and both prevention of the coming off of the resin part and an improvement in the mounting workability can be achieved.

### BRIEF DESCRIPTION OF THE DRAWINGS

Fig. 1 is a front view showing a state in which a weather strip of a first embodiment of the present invention is mounted to an opening of a luggage room of an automobile.
Fig. 2 is a cross-sectional view showing the weather strip of the first embodiment of the present invention in an initial state.
Fig. 3 is a front view showing a state in which the weather strip of the first embodiment of the present invention is mounted to the opening of the luggage room of the automobile.
Fig. 4 is a perspective view showing a state in which the weather strip of the first embodiment of the present invention is mounted to the opening of the luggage room of the automobile.
Fig. 5 is an explanatory view showing a schematic structure of a pressure reducing device which is applied to the present invention.
Fig. 6 is a cross-sectional view showing a state in which the weather strip of the first embodiment of the present invention is mounted to the opening of the luggage room of the automobile.
Fig. 7 is a perspective view showing a state in which the weather strip of the first embodiment of the present invention is mounted to the opening of the luggage room of the automobile.
Fig. 8 is a cross-sectional view showing a state in which the weather strip of the first embodiment of the present invention is mounted to the opening of the luggage room of the automobile.
Fig. 9 is a cross-sectional view showing a state in which the weather strip of the first embodiment of the present invention is mounted to the opening of the luggage room of the automobile.
Fig. 10A is a graph showing, per region, an insertion load of the weather strip of the first embodiment of the present invention.
Fig. 10B is an explanatory view showing regions of the weather strip of the first embodiment of the present invention.
Fig. 11A is a graph showing, per region, a removal load of the weather strip of the first embodiment of the present invention.
Fig. 11B is an explanatory view showing regions of the weather strip of the first embodiment of the present invention.
Fig. 12 is a cross-sectional view showing a weather strip of a second embodiment of the present invention in an initial state.
Fig. 13 is a cross-sectional view showing a state in which the weather strip of the first embodiment of the present invention is mounted to the opening of the luggage room of the automobile.
Fig. 14 is a cross-sectional view showing a weather strip of a third embodiment of the present invention in an initial state.
Fig. 15 is a cross-sectional view showing a luggage cushion rubber of a fourth embodiment of the present invention in an initial state.
Fig. 16 is a cross-sectional view showing a state in which the luggage cushion rubber of the fourth embodiment of the present invention is mounted to an opening of a luggage room of an automobile.
Fig. 17 is a cross-sectional view showing a state in which the luggage cushion rubber of the fourth embodiment of the present invention is mounted to the opening of the luggage room of the automobile.
Fig. 18 is a cross-sectional view showing a state in which the luggage cushion rubber of the fourth embodiment of the present invention is mounted to the opening of the luggage room of the automobile.
Fig. 19 is a perspective view showing a conventional weather strip.
Fig. 20 is perspective view showing a state in which a sealing member is provided at the conventional weather strip.

### BEST MODES FOR IMPLEMENTING THE INVENTION

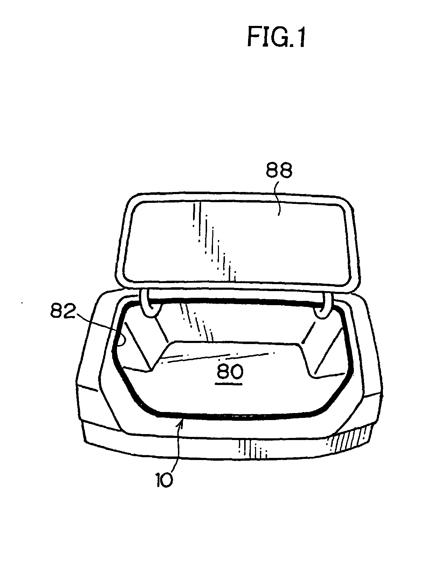

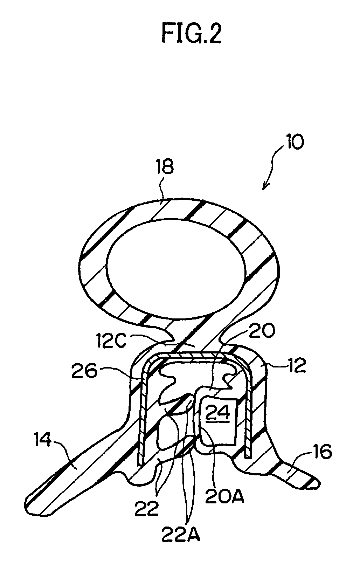

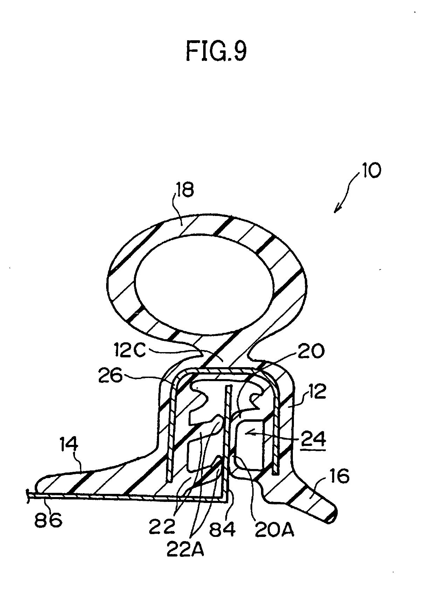

A state in which a weather strip 10 relating to a first embodiment of the present invention is mounted to an opening edge 82 of a luggage room (trunk) 80 of an automobile, is shown in Fig. 1. Further, a cross-sectional view of an initial state (state before mounting) of the weather strip 10 is shown in Fig. 2. Moreover, in Fig. 9, the weather strip 10 is shown in the same cross-section as in Fig. 2, in a state of being mounted to the opening 82.

The weather strip 10 is formed in a configuration (generally a closed curve shape, but not limited to such a shape) which can be placed along the opening 82 of the luggage room 80, by an elastically deformable material (e.g., rubber or a synthetic resin or the like). As shown in Fig. 2, the weather strip 10 has a U-shaped portion 12 having a substantially U-shaped cross-section. In a state in which the weather strip 10 is mounted to the opening 82 of the luggage room 80, as can be understood from Fig. 9, the U-shaped portion 12 is disposed so as to surround a body flange 84 which projects toward the inner side from the periphery of the opening 82. Note that a reinforcing plate 26, which is formed from a highly rigid material such as metal or the like and which is similarly formed in a U-shape in cross-section in correspondence with the configuration of the U-shaped portion 12, is embedded in the U-shaped portion 12.

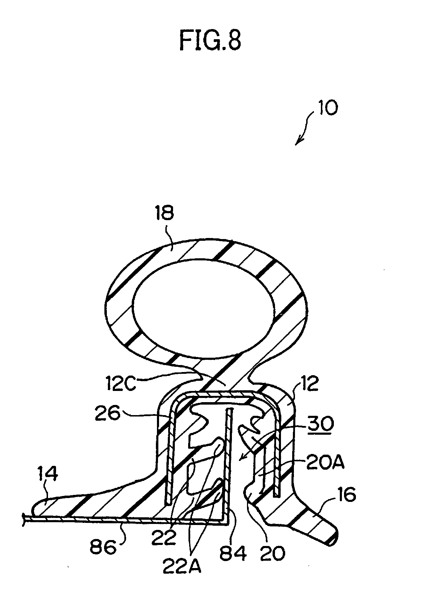

Seal lip portions 14, 16, which are inclined in directions of moving away from each other, project from a vicinity of the distal end (a vicinity of the lower end in Fig. 2) of the U-shaped portion 12. In a state in which the weather strip 10 is mounted to the opening 82 as shown in Fig. 8, the seal lip portion 14 is elastically press-fit against a body panel 86 of the opening 82. Further, in a state in which the weather strip 10 is mounted to the opening 82, the seal lip portion 16 is similarly elastically press-fit against a body panel (not illustrated) of the opening 82.

A hollow seal portion 18, whose cross-section is annular, projects from an intermediate portion 12C of the U-shaped portion 12. When a luggage back door 88 is closed in the state in which the weather strip 10 is mounted to the opening 82, the hollow seal portion 18 is press-fit against the luggage back door 88. In this way, the interior of the luggage room 80 is sealed such that rainwater or dust or the like do not enter therein.

A nipping tubular portion 20 and nipping lip portions 22 project from the inner side of the U-shaped portion 12 so as to oppose each other. The configurations of the nipping tubular portion 20 and the nipping lip portions 22 are determined such that, in an initial state (the natural state before the weather strip 10 is mounted to the opening 82), as can be seen from Fig. 2, respective projecting ends 20A, 22A thereof elastically deform and are tightly fit together.

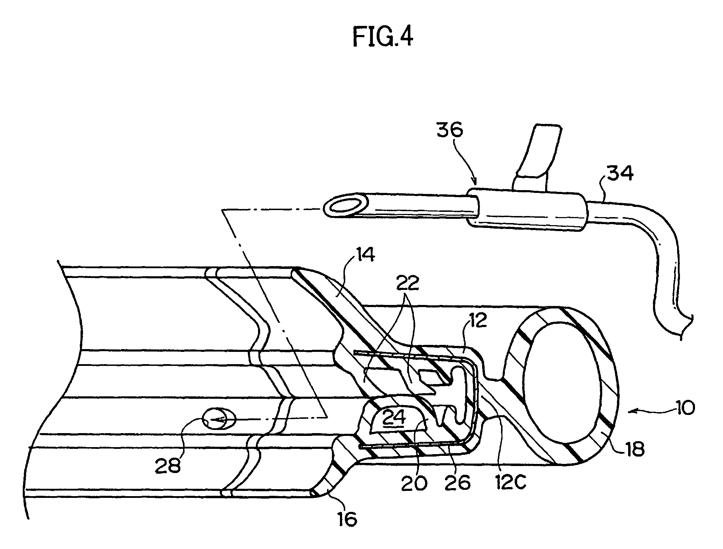

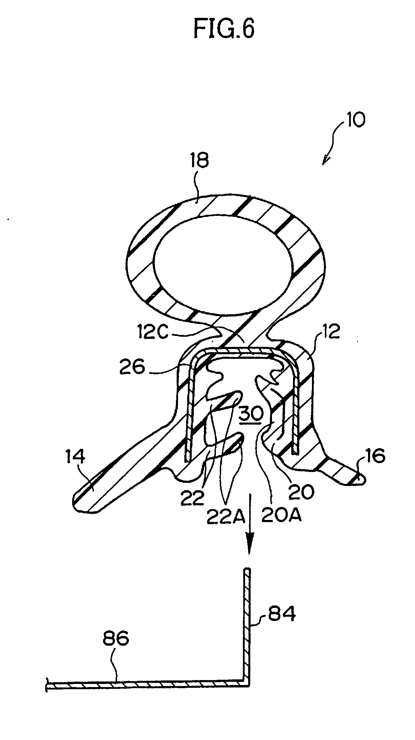

The nipping tubular portion 20 is substantially tubular in cross-section, and the interior thereof is a hollow portion 24. Further, as shown in Fig. 4, a communicating hole 28, which communicates the hollow portion 24 and the exterior, is formed in the nipping tubular portion 20. Due to air flowing out from the hollow portion 24 through this communicating hole 28, the hollow portion 24 contracts, and as shown in Fig. 6, the projecting end 20A of the nipping tubular portion 20 moves apart from the projecting ends 22A of the nipping lip portions 22, and the projecting end 20A moves to a withdrawn position (the nipping tubular portion 20 is set in a withdrawn state). In this state, a clearance 30, which is larger than the plate thickness of the body flange 84, is formed between the projecting end 20A of the nipping tubular portion 20 and the projecting ends 22A of the nipping lip portions 22.

The nipping tubular portion 20 may be formed continuously along the longitudinal direction of the U-shaped portion 12, or may be divided in the longitudinal direction, or may be formed at parts, in relation to the body flange 84. Further, with regard to the communicating hole 28 as well, as long as a reduction of pressure within the hollow portion 24 as will be described later is possible, one communicating hole 28 suffices, but two or more may be formed.

In contrast, the nipping lip portions 22 are formed in substantial plate-shapes which are flexurally deformable. Due to the nipping lip portions 22 flexurally deforming, the projecting ends 22A flexurally deform in directions of approaching and moving apart from the projecting end 20A of the nipping tubular portion 20, and the body flange 82 can be nipped by the elastic force due to this flexural deformation.

Note that, although two nipping lip portions 22 are formed in Fig. 2, the number of nipping lip portions 22 is not particularly limited, and may be one or three or more. Further, in the same way as the nipping tubular portion 20, the nipping lip portions 22 may be formed continuously along the longitudinal direction of the U-shaped portion 12, or may be divided in the longitudinal direction, or may be formed at parts, in relation to the body flange 84.

Next, the method of mounting the weather strip 10 of the first embodiment to the opening 82 of the luggage room 80, and the working of the weather strip 10 will be described.

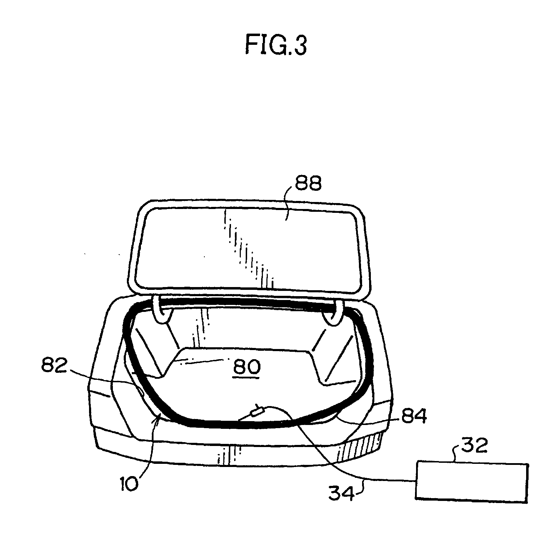

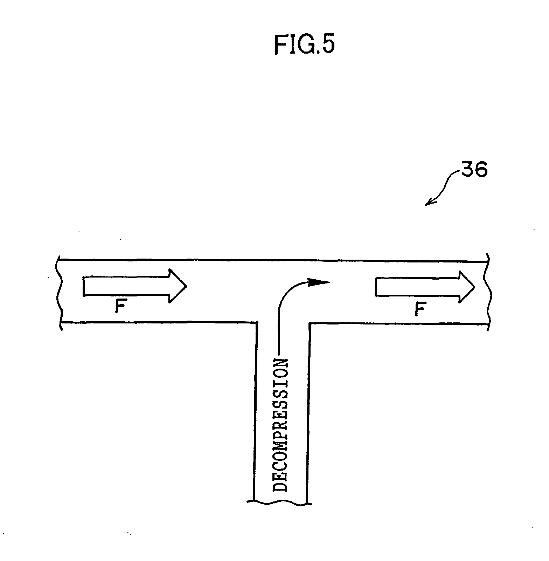

First, as shown in Fig. 3, in the initial state, the weather strip 10 is disposed along the opening 82 of the luggage room 80. At this time, there is no need to fit the body flange 84 (see Fig. 3 and Fig. 6) of the opening 82 into the interior of the U-shaped portion 12, and it suffices for the U-shaped portion 12 and the body flange 84 to oppose each other. Then, in this state, the distal end of a tube 34 of a pressure reducing device 32 is inserted into the communicating hole 28. The pressure reducing device 32 is not particularly limited provided that it can reduce the pressure of the interior of the hollow portion 24 as will be described later, so as to form the clearance 30, which is larger than the plate thickness of the body flange 84, between the projecting end 20A of the nipping tubular portion 20 and the projecting ends 22A of the nipping lip portions 22. For example, a widely-used device which is used in assembly lines for general automobiles, e.g., a vacuum pump or the like, can be used. Further, a device which utilizes the principles of spraying can be used. This device is equipped with a three-forked tube member 36 shown in Fig. 5. Due to the flow of air in the direction of arrows F of the tube member 36, pressure reduction is carried out as shown in Fig. 5 on the basis of the principles of so-called spraying. Such pressure reducing devices utilizing the principles of spraying are often used in assembly lines of general automobiles, and no special device is required. Thus, pressure reduction of the interior of the hollow portion 24 as will be described later can be carried out at a low cost, and the mounting work of the weather strip 10 can be carried out at a low cost.

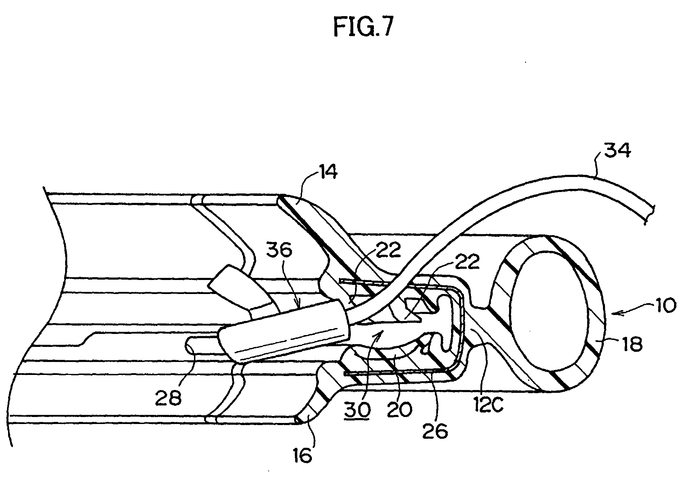

Then, the pressure reducing device 32 is operated, and air is made to flow out from the hollow portion 24, and as shown in Fig. 6 and Fig. 7, the pressure at the interior of the hollow portion 24 is reduced (pressure reducing step, flow out step). In this way, the projecting end 20A of the nipping tubular portion 20 moves to the withdrawn position, and the clearance 30, which is larger than the plate thickness of the body flange 84, is formed between the projecting ends 22A of the nipping lip portions 22 and the projecting end 20A of the nipping tubular portion 20.

In the state in which the clearance 30 is formed in this way, as shown in Fig. 8, the weather strip 10 is fit and installed at the body flange 84 (installing step) such that the body flange 84 is inserted between the nipping tubular portion 20 and the nipping lip portions 22. The clearance 30, which is larger than the plate thickness of the body flange 84, is formed between the projecting end 20A of the nipping tubular portion 20 and the projecting ends 22A of the nipping lip portions 22. At the time of fitting the weather strip 10, there is no need to elastically deform the nipping tubular portion 20 and the nipping lip portions 22. Thus the insertion load needed for fitting (load required at the time of mounting) is small as compared with a structure in which such a clearance 30 is not formed.

Then, the weather strip 10 is fit to the body flange 84 along the entire periphery of the opening 82, such that the U-shaped portion of the weather strip 10 and the body flange 84 are set in a predetermined positional relationship.

Finally, when operation of the pressure reducing device 32 (see Fig. 3) is stopped, because the communicating hole 28 is substantially open, air flows into the hollow portion 24 through the communicating hole 28, and the pressure within the hollow portion 24 returns to atmospheric pressure (atmospheric pressure restoring step, flow in step). In this way, the nipping tubular portion 20 attempts to revert to the initial state (see Fig. 2) due to the elastic force thereof, and as shown in Fig. 9, the projecting end 20A of the nipping tubular portion 20 is strongly press-fit against the body flange 84. Then, the body flange 84 is nipped in the plate thickness direction by the projecting end 20A of the nipping tubular portion 20 and the projecting ends 22A of the nipping lip portions 22. By the above, as shown in Fig. 1, mounting of the weather strip 10 is completed.

Note that, in the atmospheric pressure restoring step, the projecting end 20A can be made to strongly press-fit against the body flange 84 merely by stopping operation of the pressure reducing device 32, and no operation for actively restoring the nipping tubular portion 20 to the original state is particularly required. Because no particular device or step is required therefor, the atmospheric pressure restoring operation within the hollow portion 24 can be carried out. Accordingly, an increase in the costs of the mounting operation of the weather strip 10 can be prevented, and the mounting operation can be carried out at a low cost.

In this way, at the weather strip 10 of the first embodiment, at the time of mounting, the clearance 30 is formed, and the insertion load (load required at the time of mounting) is made small. Thus, the engaging force of the weather strip 10, or in other words, the removal load, can be made large without directly affecting the insertion load. In other words, the insertion load and the engaging load (force) can be set independently, and it is possible to make the insertion load small and to make the engaging load great. Thus, an improvement in the workability of the mounting operation and prevention of the weather strip 10 from coming off can both be achieved at high levels.

Note that, in order to make the insertion load (load required at the time of mounting) small in this way, it is not absolutely necessary for the clearance 30 between the projecting end 20A of the nipping tubular portion 20 and the projecting ends 22A of the nipping lip portions 22 to be larger than the plate thickness of the body flange 84. Namely, even in a case in which the clearance 30 is smaller than the plate thickness of the body flange 84, or a case in which the clearance 30 is not formed and the projecting end 20A of the nipping tubular portion 20 and the projecting ends 22A of the nipping lip portions 22 contact each other slightly (the nipping tubular portion 20 and the nipping lip portions 22 contact without substantially elastically deforming), the projecting end 20A of the nipping tubular portion 20 is, as compared with the initial state, moved in the direction of moving away from the projecting ends 22A of the nipping lip portions 22, and thus, the insertion load is small.

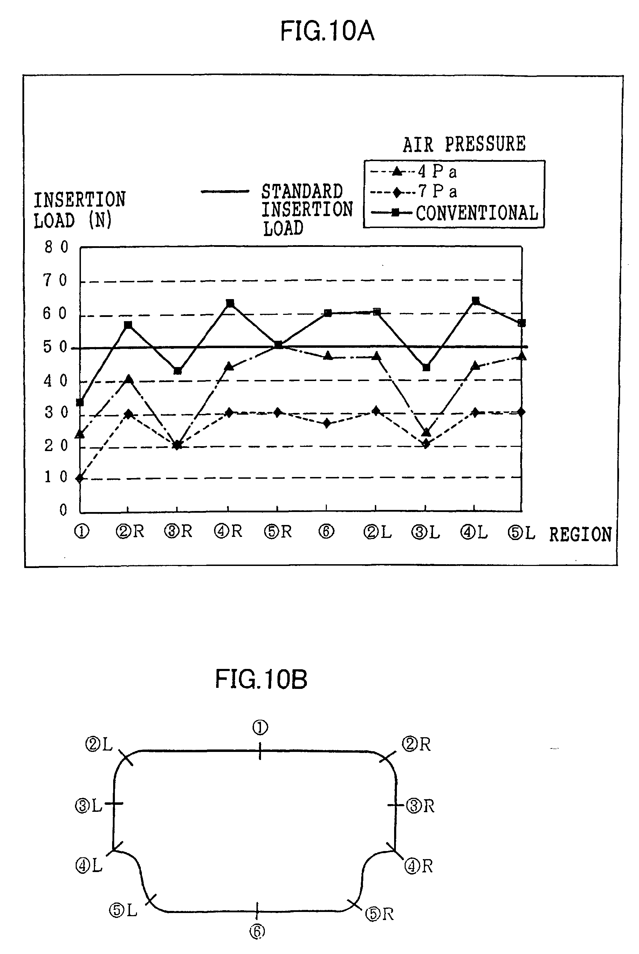

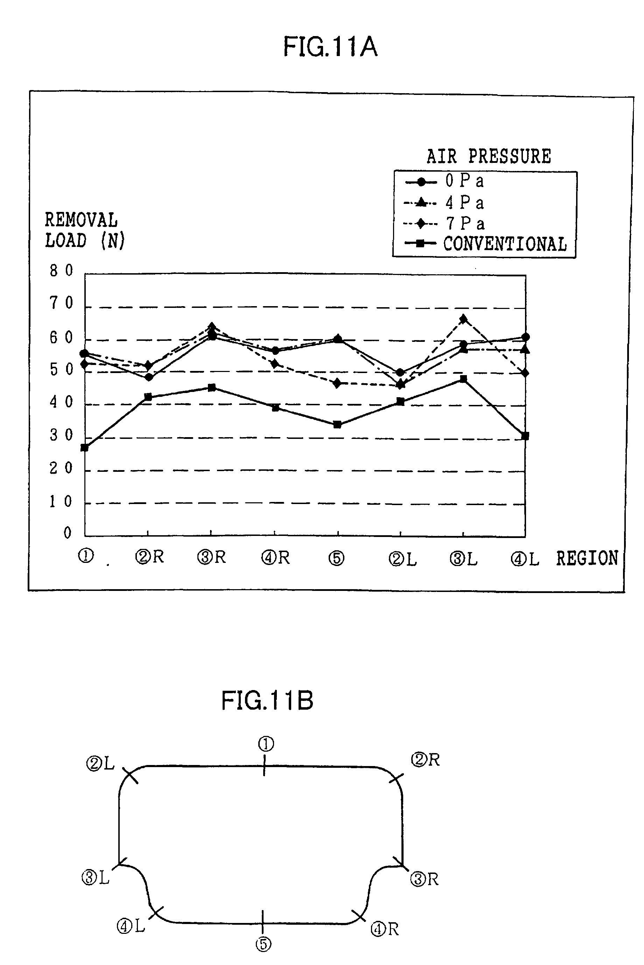

Values of the insertion load (load required at the time of mounting) at each region of the weather strip are shown in a graph in Fig. 10A for the weather strip 10 of the first embodiment and a conventional weather strip. Further, values of the removal load (corresponding to the engaging force) at each region of the weather strip are shown in a graph in Fig. 11A for the weather strip 10 of the first embodiment and a conventional weather strip. What is called the "conventional weather strip" here is a structure in which the nipping lip portions 22 are provided so as to oppose one another without providing the nipping tubular portion 20 of the present embodiment, such as the structure shown in Fig. 19 for example. Further, the positions of the respective regions of the weather strip are, as shown in Fig. 10B and Fig. 11B which show the weather strip as seen in front view, denoted by the reference symbols used in these respective drawings. These regions correspond one-to-one to the reference symbols shown on the horizontal axes of the graphs of Figs. 10A and Fig. 11A. Further, in Fig. 10A and Fig. 11A, "air pressure" is the air pressure within the hollow portion 24 whose pressure is reduced by the pressure reducing device 32.

As can be understood from the graph shown in Fig. 10A, at the weather strip 10 of the present embodiment, the insertion load (load required at the time of mounting) is small as compared with the conventional weather strip, regardless of the air pressure and regardless of the region of the weather strip 10.

As can be understood from the graph shown in Fig. 11A, at the weather strip 10 of the present embodiment, the removal load (corresponding to the engaging force) is large as compared with the conventional weather strip, regardless of the air pressure and regardless of the region of the weather strip 10.

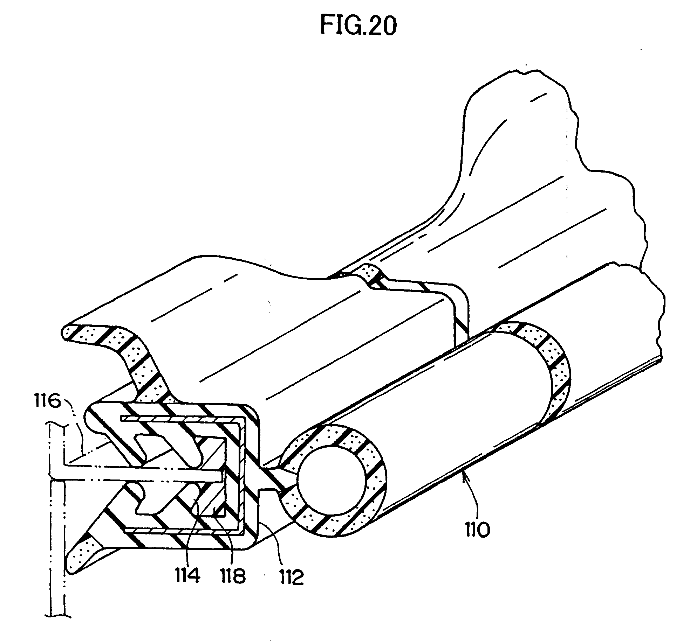

Note that, in the weather strip 10 of the first embodiment, as compared with the conventional weather strip, the contact surface area with respect to the body flange 84 is great as can be seen from Fig. 9, and the weather strip 10 has greater sealability than the conventional weather strip. In the conventional weather strip, in order to improve the sealability, as shown in Fig. 20 for example, a sealing member 118 is disposed between the body flange 84 and the U-shaped portion 12. However, in the weather strip 10 of the first embodiment, without any particular need for such a sealing member, good sealability between the body flange 84 and the weather strip is ensured, and liquids such as rainwater or the like can be reliably prevented from passing through.

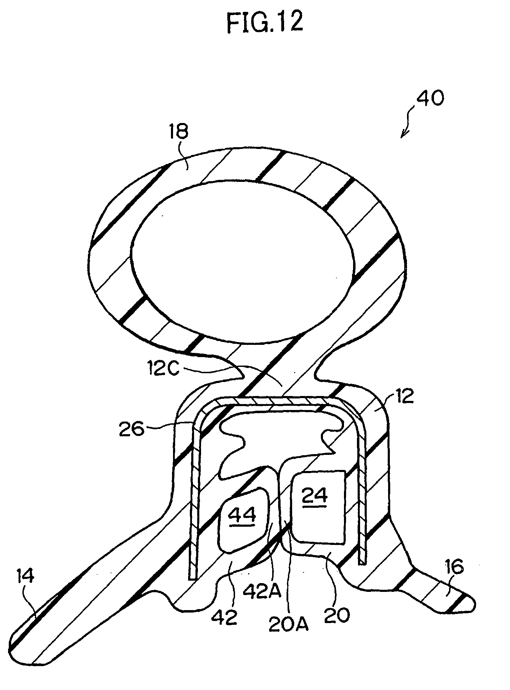

A cross-sectional view of an initial state of a weather strip 40 of a second embodiment of the present invention is shown in Fig. 12. In the same way as the weather strip 10 of the first embodiment, the weather strip 40 of the second embodiment is mounted to and used at the opening 82 (see Fig. 1) of the luggage room 80 of an automobile. Because the basic structure is the same, the same structural elements, members and the like are denoted by the same reference numerals, and description thereof is omitted.

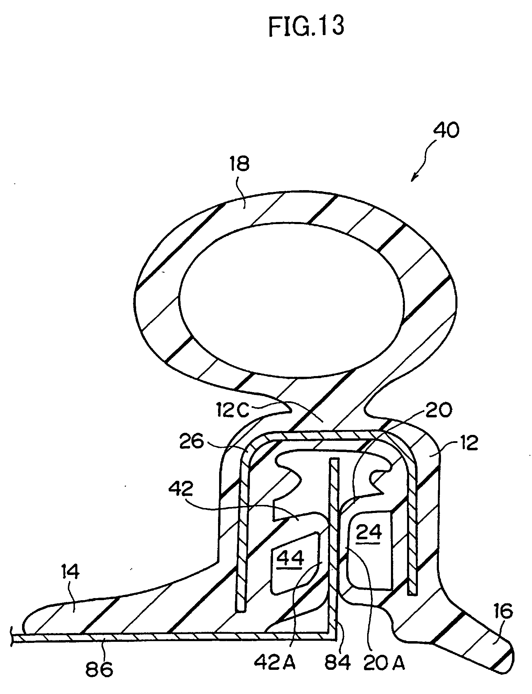

At the weather strip 40, in place of the nipping lip portions 22 (see Fig. 2) of the first embodiment, a nipping tubular portion 42 having a hollow portion 44 is formed. The nipping tubular portion 42 opposes the nipping tubular portion 20. The nipping tubular portion 42 is formed substantially symmetrically to the nipping tubular portion 20 such that the body flange 84 can be nipped (see Fig. 13) between a projecting end 42A of the nipping tubular portion 42 and the projecting end 20A of the nipping tubular portion 20. Further, at the nipping tubular portion 42 as well, a communicating hole (not shown in Fig. 12) which is similar to the communicating hole 28 is formed, such that the hollow portion 44 is communicated with the exterior. Then, in the initial state, the projecting end 20A of the nipping tubular portion 20 and the projecting end 42A of the nipping tubular portion 42 elastically deform and are press-fit, but when the pressure within the hollow portions 24, 44 is reduced, the projecting ends 20A, 42A move apart from one another such that a clearance which is larger than the plate thickness of the body flange 84 is formed therebetween. Other than this, the weather strip 40 of the second embodiment is structured the same as the weather strip 10 of the first embodiment.

Accordingly, at the weather strip 40 of the second embodiment as well, in the same way as the weather strip 10 of the first embodiment, the pressure reducing device 32 (see Fig. 3) is used to reduce the pressure within the hollow portions 24, 44, and a clearance which is larger than the plate thickness of the body flange 84 is formed between the projecting ends 20A, 42A. The U-shaped portion 12 can thereby be placed at the body flange 84 by a small insertion load (load required at the time of mounting), and the weather strip 40 can be installed.

Then, by the communicating holes being opened and the pressures within the hollow portions 24, 44 being set to atmospheric pressure, the nipping tubular portions 20, 42 attempt to return to the initial state due to elastic force, and as shown in Fig. 13, the respective projecting ends 20A, 42A thereof are strongly press-fit against and nip the body flange 84.

In this way, in the weather strip 40 of the second embodiment as well, the insertion load and the engaging force can be set independently, and it is possible to make the insertion load small and to make the engaging force great. Thus, an improvement in the workability of the mounting operation and prevention of the weather strip 10 from coming off can both be achieved at high levels.

Further, a case has been described in which, in the weather strip 40 of the above-described second embodiment, communicating holes are formed at the nipping tubular portion 20 and the nipping tubular portion 42, and the hollow portions 24, 44 are communicated with the exterior. However, it suffices to form a communicating hole at either one of the nipping tubular portions, e.g., at only the nipping tubular portion 20. In this case, when the pressure of the hollow portion 24 is reduced by using the pressure reducing device 32, only the projecting end 20A of the nipping tubular portion 20 moves in a direction of moving away from the projecting end 42A of the nipping tubular portion 42, and thus, a clearance can be ensured therebetween. Therefore, even in a case in which the plate thickness of the body flange 84 is thick, the weather strip 40 can be mounted to the body flange 84 by a small insertion load (load required at the time of mounting).

In particular, at the weather strip 40 of the second embodiment, because the body flange 84 is nipped by the nipping tubular portions 20, 42, the elastic forces of the nipping tubular portions 20, 42 can be set to be large, and a greater nipping force (engaging force) than the weather strip 10 of the first embodiment can be obtained. In addition, when the pressure of the hollow portions 24, 44 is reduced by using the pressure reducing device 32, the projecting ends 20A, 42A of the nipping tubular portions 20, 42 move in directions of moving apart from one another. Thus, it is easy to ensure a large clearance therebetween. Therefore, even in a case in which the plate thickness of the body flange 84 is thick, the weather strip 40 can be mounted to the body flange 84 by a small insertion load (load required at the time of mounting).

Further, as can be seen by comparing Fig. 9 and Fig. 13, in a case in which the nipping tubular portion 42 is used, as compared with the nipping lip portions 22, the contact surface area with the body flange 84 can be increased. Thus, the weather strip 40 of the second embodiment has even better sealability than the weather strip 10 of the first embodiment.

In contrast, with a structure in which the body flange 84 is nipped by the nipping tubular portion 20 and the nipping lip portions 22 as in the weather strip 10 of the first embodiment, it is easy to finely adjust the nipping force. Namely, as compared with the nipping tubular portion 20, the degrees of freedom of the configuration, such as the projecting length and thickness and the like, of the nipping lip portion 22 are great, and by changing the configuration, it is easy to vary the elastic force. Accordingly, the nipping force for nipping the body flange 84 can be finely adjusted by changing the configuration of the nipping lip portion 22, and the insertion load (load required at the time of mounting) and the engaging force can be finely adjusted. Further, even in cases such as when the configuration of the body flange 84 is not uniform, a nipping lip portion 22 of a configuration corresponding thereto can be formed, and the body flange 84 can be reliably nipped.

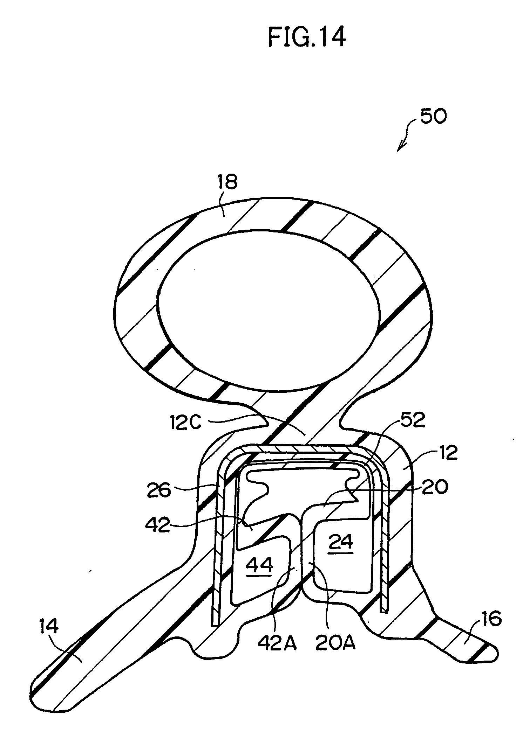

A cross-sectional view of a regular state of a weather strip 50 of a third embodiment of the present invention is shown in Fig. 14. The weather strip 50 of the third embodiment is structured substantially the same as the weather strip 40 of the second embodiment, but the two hollow portions 24, 44 are communicated by a communicating portion 52 which is formed within the U-shaped portion 12. Further, no communicating hole is formed at the nipping tubular portion 42. Other than these, the structure is the same as the weather strip 40 of the second embodiment.

Accordingly, in the weather strip 50 of the third embodiment, when the distal end (see Fig. 4) of the tube 34 of the pressure reducing device 32 is inserted into the communicating hole 28 and the pressure within the hollow portion 24 is reduced, the pressure within the hollow portion 44 is simultaneously reduced. Namely, as compared with the weather strip 40 of the second embodiment, operations for respectively reducing the pressure of the two hollow portions 24, 44 are eliminated, and the pressure of the interiors of the two hollow portions 24, 44 can be reduced by a single reduction in pressure. Thus, the workability of the mounting operation is even more excellent. Note that, it suffices to not provide a communicating hole at the nipping tubular portion 20, and to only provide a communicating hole at the nipping tubular portion 42.

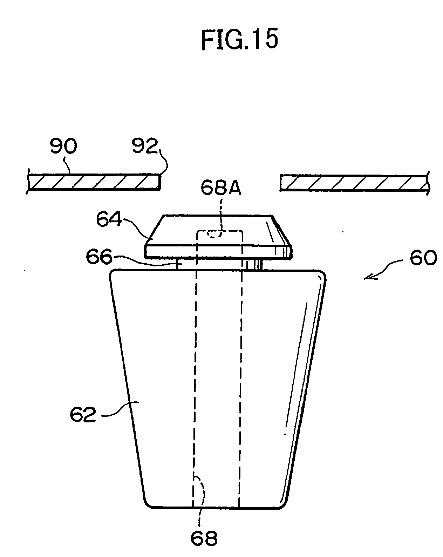

A luggage cushion rubber 60 relating to a fourth embodiment of the present invention is shown in Fig. 15. The luggage cushion rubber 60 is mounted to a body flange 90 of a luggage back door of an automobile.

The entire luggage cushion rubber 60 is formed by rubber (or an elastically deformable material), and is formed by a cushion rubber main body 62 and an engaging portion 64 which projects from the cushion rubber main body 62 via a connecting portion 66.

A hollow portion 68 is formed in the engaging portion 64. Further, a through hole, which passes through the cushion rubber main body 62 and reaches the hollow portion 68, is formed from one end (the lower side end portion in Fig. 15) of the cushion rubber main body 62, and this one end is open to the exterior. Thus, the hollow portion 68 is communicated with the exterior. Accordingly, at the luggage cushion rubber 60 of the fourth embodiment, the hollow portion 68 serves as well as the communicating hole of the present invention.

In the initial state, the engaging portion 64 is larger than an engagement hole 92 formed in the body flange 90. When the hollow portion 68 is contracted, the engaging portion 64 as well contracts correspondingly, and becomes a predetermined configuration which is smaller than the engagement hole 92. Note that the cushion main body 62 is larger than the engagement hole 92.

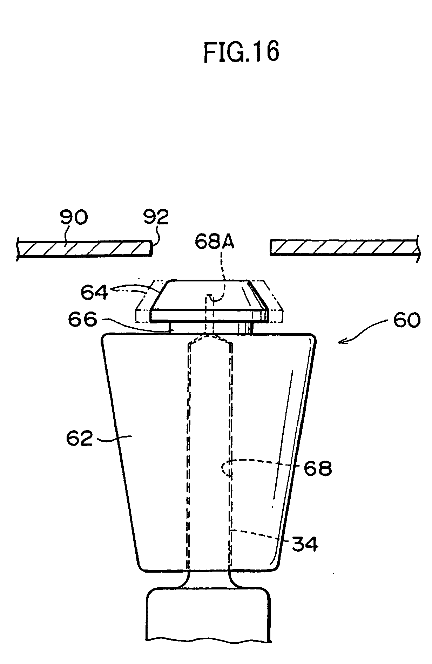

When the luggage cushion rubber 60 of the fourth embodiment which is structured in this way is to be mounted to the body flange 90, first, as shown in Fig. 16, the distal end of the tube 34 of the pressure reducing device 32 (see Fig. 3) is inserted to a predetermined position of the hollow portion 68 (a position at which a gap remains between a deepest portion 68A of the hollow portion 68 and the distal end of the tube 34, and at which, during a pressure reducing step which will be described later, contraction of the engaging portion 64 is not impeded by the tube 34). The pressure reducing device 32 is operated, air is made to flow out from the interior of the hollow portion 68, and the pressure is reduced (pressure reducing step, flow out step). In this way, the engaging portion 64 contracts and becomes smaller than the engagement hole 92. At this time, the cushion rubber main body 62 does not contract because the distal end of the tube 34 is inserted in the hollow portion 68 (communicating hole) at the portion corresponding to the cushion rubber main body 62.

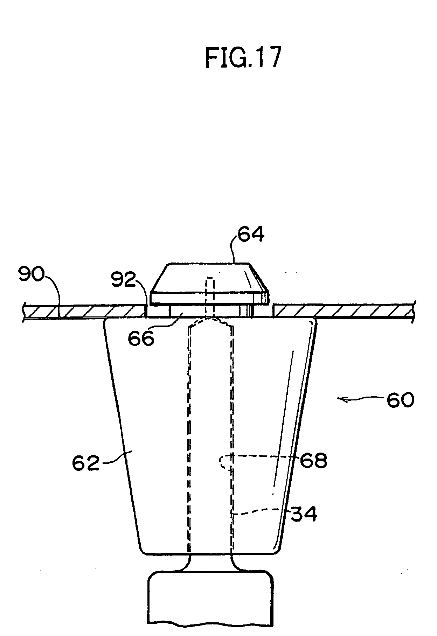

In this state, as shown in Fig. 17, the engaging portion 64 is inserted and installed (installation step) in the engagement hole 92 to a position at which the cushion rubber main body 62 abuts the body flange 90. Because the engaging portion 64 is smaller than the engagement hole 92, the engaging portion 64 does not interfere with the engagement hole 92, and can be inserted smoothly into the engagement hole 92 by a small force.

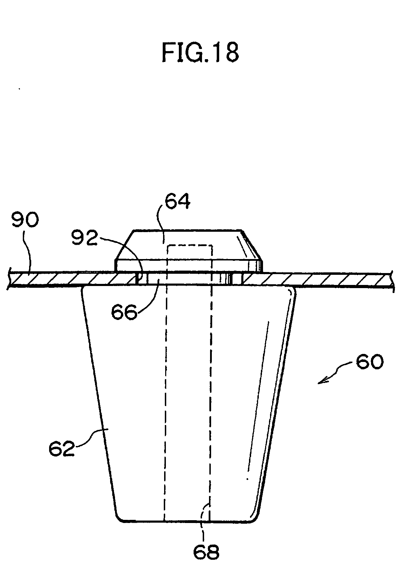

After the engaging portion 64 is inserted into the engagement hole 92, operation of the pressure reducing device 32 is stopped, air is made to flow into the hollow portion 68, and the pressure within the hollow portion 68 is made to be atmospheric pressure (restoring step, flow in step) . In this way, as shown in Fig. 18, the engaging portion 64 returns to the initial state due to elastic force, and becomes larger than the engagement hole 92, and the engaging portion 64 of the luggage cushion rubber 60 engages with the body flange 90. Due to the above, the mounting of the luggage cushion rubber 60 to the body flange 90 is completed.

In this way, in the luggage cushion rubber 60 of the fourth embodiment, by making the engaging portion 64 smaller than the engagement hole 92 at the time of mounting, the load required for mounting (load required at the time of mounting) is made small, and the engaging force of the luggage cushion rubber 60, in other words, the removal load, can be set to be large without directly affecting the load required at the time of mounting. Namely, because the load required at the time of mounting can be made small and the engaging force can be made large, an improvement in workability of the mounting operation and preventing the luggage cushion rubber 60 from coming off can both be achieved at high levels.

As described above, for all of the resin parts of the present invention (the weather strips 10, 40, 50 and the luggage cushion rubber 60), the load required at the time of mounting can be made small and the engaging force can be made large. Thus, an improvement in workability of the mounting operation of the resin part and prevention of coming apart from the mounted state can both be achieved at high levels.

Note that the mounting method for mounting the resin part of the present invention to a member to be mounted to (the body flange 84 and the body flange 90) is not limited to those described above. For example, without using the pressure reducing device 32, the nipping tubular portions 20, 42 or the engaging portion 64 can be contracted by being pressed from the exterior. When the pressure reducing device 32 is used as in the respective embodiments described above, the entire nipping tubular portions 20, 42 or engaging portion 64 can be contracted uniformly and in a short time, and thus, this is particularly preferable from the standpoint of improving the workability of the mounting operation.

Similarly, at the time of engaging the nipping tubular portions 20, 42 or the engaging portion 64 to the member to be engaged, it is possible to increase the internal pressure of the hollow portion not merely by setting the pressure within the hollow portion to atmospheric pressure, but by actively feeding air in or the like, such that the nipping tubular portion 20, 42 or the engaging portion 64 is made larger than the initial state. In such a structure, for example, in the case of the weather strips of the first through third embodiments, a structure is possible in which the nipping tubular portions 20, 42 are formed by materials which do not elastically deform, and are formed in configurations such that the clearance 30 is formed in the initial state, and after installation at the body flange 84, air is fed into the hollow portions such that the nipping tubular portions 20, 42 are made large due to plastic deformation and are press-fit to the body flange 84. In the case of the luggage cushion rubber 60 of the fourth embodiment as well, similarly, a structure is possible in which the engaging portion 64 is formed by a material which does not elastically deform and in a configuration which is smaller than the engagement hole 92 in the initial state, and after insertion into the engagement hole 92, air is fed in such that the engaging portion 64 becomes large due to plastic deformation and engages with the engagement hole 92.

Further, the resin part of the present invention is not limited to those described above. For example, the resin part may be a sealing member for a vehicle cover which seals between a general cover provided at a vehicle (a door for getting in and out of the vehicle, a trunk hood, a fuel lid, or the like) and the vehicle, or may be a member for decoration (trim for a vehicle opening) which is disposed at the periphery of an opening provided at a vehicle. Moreover, the resin part may be a pillar interior shielding member which is provided within a pillar of a vehicle. The pillar interior shielding member may be formed so as to be larger than the pillar hole in an initial state, but become smaller than the pillar hole by reducing the pressure of a hollow portion.

Further, cases have been described in which a communicating hole which communicates a hollow portion with the exterior are formed in the weather strips of the above-described first through third embodiments and the luggage cushion rubber of the fourth embodiment. However, a communicating hole is not absolutely necessary. Namely, even in a case in which no communicating hole is formed at the nipping tubular portion of the weather strips of the first through third embodiments, because the nipping tubular portion is a variable volume structure which is provided with the hollow portion, the volume of the nipping tubular portion can be varied relatively freely. Accordingly, as compared with a case in which a nipping lip portion which is not a variable volume structure is forcibly elastically deformed and fit at a vehicle body panel flange as in the conventional art, the weather strip can be mounted to the body flange by a small insertion load (load required at the time of mounting). In this case, for example, it suffices to not use the pressure reducing device, and to (in place of the flow out step) push and contract the nipping tubular portion from the exterior (contracting step). Similarly, even in a case in which no communicating hole is formed in the luggage cushion rubber of the fourth embodiment, because the engaging portion has the hollow portion, the volume of the engaging portion can be varied relatively freely. Accordingly, the luggage cushion rubber can be mounted to a body flange by a small load (load required at the time of mounting). In this case as well, for example, it suffices to not use the pressure reducing device, and to (in place of the flow out step) push and contract the engaging portion from the exterior (contracting step).

Further, even in a case in which no communicating hole is formed in the nipping tubular portion of the weather strips of the first through third embodiments, after mounting (installation) (or before mounting), a hole, which corresponds to the communicating hole which communicates the hollow portion and the exterior, may be formed in the nipping tubular portion. For example, by forming, by a needle or the like, a hole in the nipping tubular portion so as to communicate the hollow portion and the exterior (setting a hole forming step before the flow out step), effects which are equivalent to the weather strips of the above-described first through third embodiments can be obtained. Further, even in a case in which no communicating hole is formed in the luggage cushion rubber of the fourth embodiment, after mounting (installation) (or before mounting), a hole, which corresponds to the communicating hole which communicates the hollow portion and the exterior, may be formed in the luggage cushion rubber main body. For example, by forming, by a needle or the like, a hole in the luggage cushion rubber main body so as to communicate the hollow portion and the exterior (setting a hole forming step before the flow out step), effects which are equivalent to the luggage cushion rubber of the above-described fourth embodiment can be obtained.

## Claims

1. A resin part having an engaging portion which is engageable with a member to be engaged, the engaging portion having at least one expanding-and-contracting portion which is expandable and contractible,
wherein, due to the expanding-and-contracting portion expanding and contracting, the expanding-and-contracting portion varies between:
an engagement state which is a state in which the engaging member is engageable with the member to be engaged; and
a withdrawn state which is a state in which the engaging member is not engageable with the member to be engaged.

2. A resin part according to claim 1, wherein the expanding-and-contracting portion includes a hollow portion.

3. A resin part according to claim 2, wherein the expanding-and-contracting portion expands and contracts due to a fluid flowing into and flowing out from an interior of the hollow portion.

4. A resin part according to claim 2, wherein the expanding-and-contracting portion has a communicating hole which communicates the hollow portion and an exterior.

5. A resin part according to claim 2, wherein the engaging portion has a plurality of expanding-and-contracting portions, and the engaging portion engages with the member to be engaged due to the member to be engaged being nipped by the plurality of expanding-and-contracting portions.

6. A resin part according to claim 5, wherein at least any one of the plurality of expanding-and-contracting portions has a communicating hole which communicates the hollow portion and an exterior.

7. A resin part according to claim 5, wherein the engaging portion has a connecting portion which connects respective hollow portions of the plurality of expanding-and-contracting portions.

8. A resin part according to claim 7, wherein at least any one of the plurality of expanding-and-contracting portions has a communicating hole which communicates the hollow portion and an exterior.

9. A resin part according to claim 1, wherein the expanding-and-contracting portion is formed of a material which is elastically deformable.

10. A resin part according to claim 2, wherein in a case in which pressure within the hollow portion is substantially atmospheric pressure, the expanding-and-contracting portion is set in the engagement state.

11. A resin part according to claim 1, wherein the engaging portion has at least one nipping portion, and the engaging portion engages with the member to be engaged due to the member to be engaged being nipped by the expanding-and-contracting portion and the nipping portion.

12. A resin part according to claim 11, wherein at least one nipping portion is a nipping lip portion which is formed in a flexurally deformable substantial plate-shape, and which, by elastic force of flexural deformation and together with the expanding-and-contracting portion, nips the member to be engaged.

13. A resin part according to claim 4, wherein the engaging portion is the expanding-and-contracting portion, and the hollow portion also serves as the communicating hole.

14. A resin part according to claim 1, wherein the resin part is a sealing member for a vehicle cover which seals between a cover provided at a vehicle and the vehicle.

15. A resin part according to claim 1, wherein the resin part is a trim for a vehicle opening which is disposed at an opening provided at a vehicle.

16. A resin part engaging method for engaging, to a member to be engaged, a resin part having an engaging portion which is engageable with the member to be engaged, the engaging portion having at least one expanding-and-contracting portion, and due to the expanding-and-contracting portion expanding and contracting, the expanding-and-contracting portion varies between an engagement state which is a state in which the engaging member is engageable with the member to be engaged, and a withdrawn state which is a state in which the engaging member is not engageable with the member to be engaged, said method comprising:
a withdrawing step of varying the expanding-and-contracting portion to the withdrawn state;
an installing step of installing the resin part to the member to be engaged, when the expanding-and-contracting portion is in the withdrawn state; and
an engaging step of varying, to the engagement state, the expanding-and-contracting portion of the resin part which is installed at the member to be engaged.

17. A resin part engaging method according to claim 16, wherein the withdrawing step is a flow out step of varying the expanding-and-contracting portion to the withdrawn state by making fluid of the hollow portion included in the expanding-and-contracting portion flow out, and the engaging step is a flow in step of varying the expanding-and-contracting portion to the engagement state by making fluid flow into the hollow portion.

18. A resin part engaging method according to claim 17, wherein the flow out step makes fluid of the hollow portion flow out from a communicating hole which communicates the hollow portion and an exterior, and the flow in step makes fluid flow into the hollow portion from the communicating hole.

19. A resin part engaging method according to claim 16, further comprising a communicating hole forming step of forming a communicating hole which communicates the hollow portion and an exterior.

20. A resin part engaging method according to claim 18, wherein the flow out step is a pressure reducing step of reducing pressure within the hollow portion by principles of spraying.

21. A resin part engaging method according to claim 18, wherein the flow in step is an atmospheric pressure restoring step which makes pressure within the hollow portion substantially atmospheric pressure.

22. A resin part engaging structure for engaging, to a member to be engaged, a resin part having an engaging portion which is engageable with the member to be engaged, the engaging portion having at least one expanding-and-contracting portion, and due to the expanding-and-contracting portion expanding and contracting, the expanding-and-contracting portion varies between an engagement state which is a state in which the engaging member is engageable with the member to be engaged, and a withdrawn state which is a state in which the engaging member is not engageable with the member to be engaged, and the expanding-and-contracting portion includes a hollow portion, wherein the expanding-and-contracting portion is varied to the withdrawn state due to fluid within the hollow portion flowing out, and after installation to the member to be engaged, the expanding-and-contracting portion is varied to the engaged state due to fluid flowing into the hollow portion, and is engaged to the member to be engaged.

## Amended claims

### Amended claims under Art. 19.1 PCT

1. (amended) A resin part having an engaging portion which is engageable with a member to be engaged, the engaging portion having at least one expanding-and-contracting portion, the expanding-and-contracting portion having:
a hollow portion; and
a communicating hole which communicates the hollow portion and an exterior,
and the expanding-and-contracting portion is expandable and contractible by fluid flowing in and flowing out of the hollow portion,
wherein, due to the expanding-and-contracting portion expanding and contracting, the expanding-and-contracting portion varies between:
an engagement state which is a state in which the engaging member is engageable with the member to be engaged; and
a withdrawn state which is a state in which the engaging member is not engageable with the member to be engaged.

2. (deleted)

3. (deleted)

4. (deleted)

5. (amended) A resin part according to claim 1, wherein the engaging portion has a plurality of expanding-and-contracting portions, and the engaging portion engages with the member to be engaged due to the member to be engaged being nipped by the plurality of expanding-and-contracting portions.

6. A resin part according to claim 5, wherein at least any one of the plurality of expanding-and-contracting portions has a communicating hole which communicates the hollow portion and an exterior.

7. A resin part according to claim 5, wherein the engaging portion has a connecting portion which connects respective hollow portions of the plurality of expanding-and-contracting portions.

8. A resin part according to claim 7, wherein at least any one of the plurality of expanding-and-contracting portions has a communicating hole which communicates the hollow portion and an exterior.

9. A resin part according to claim 1, wherein the expanding-and-contracting portion is formed of a material which is elastically deformable.

10. (amended) A resin part according to claim 1, wherein in a case in which pressure within the hollow portion is substantially atmospheric pressure, the expanding-and-contracting portion is set in the engagement state.

11. A resin part according to claim 1, wherein the engaging portion has at least one nipping portion, and the engaging portion engages with the member to be engaged due to the member to be engaged being nipped by the expanding-and-contracting portion and the nipping portion.

12. A resin part according to claim 11, wherein at least one nipping portion is a nipping lip portion which is formed in a flexurally deformable substantial plate-shape, and which, by elastic force of flexural deformation and together with the expanding-and-contracting portion, nips the member to be engaged.

13. (amended) A resin part according to claim 1, wherein the engaging portion is the expanding-and-contracting portion, and the hollow portion also serves as the communicating hole.

14. A resin part according to claim 1, wherein the resin part is a sealing member for a vehicle cover which seals between a cover provided at a vehicle and the vehicle.

15. A resin part according to claim 1, wherein the resin part is a trim for a vehicle opening which is disposed at an opening provided at a vehicle.

16. (amended) A resin part engaging method for engaging, to a member to be engaged, a resin part having an engaging portion which is engageable with the member to be engaged, the engaging portion having at least one expanding and contracting portion, and due to the expanding-and-contracting portion expanding and contracting, the expanding-and-contracting portion varying between an engagement state which is a state in which the engaging member is engageable with the member to be engaged, and a withdrawn state which is a state in which the engaging member is not engageable with the member to be engaged, said method comprising:
a withdrawing step of varying the expanding-and-contracting portion to the withdrawn state;
an installing step of installing the resin part to the member to be engaged, when the expanding-and-contracting portion is in the withdrawn state; and
an engaging step of varying, to the engagement state, the expanding-and-contracting portion of the resin part which is installed at the member to be engaged,
wherein the withdrawing step is a fluid flow out step of varying the expanding-and-contracting portion to the withdrawn state by making fluid, which is in a hollow portion included in the expanding-and-contracting portion, flow out via a communicating hole which communicates the hollow portion and an exterior, and
the engaging step is a fluid flow in step of varying the expanding-and-contracting portion to the engagement state by making fluid flow into the hollow portion via the communicating hole.

17. (deleted)

18. (deleted)

19. (amended) A resin part engaging method for engaging, to a member to be engaged, a resin part having an engaging portion which is engageable with the member to be engaged, the engaging portion having at least one expanding-and-contracting portion, and due to the expanding-and-contracting portion expanding and contracting, the expanding-and-contracting portion varying between an engagement state which is a state in which the engaging member is engageable with the member to be engaged, and a withdrawn state which is a state in which the engaging member is not engageable with the member to be engaged, said method comprising:
a communicating hole forming step of forming a communicating hole which communicates an exterior and a hollow portion which is included in the expanding-and-contracting portion;
a withdrawing step of varying the expanding-and-contracting portion to the withdrawn state;
an installing step of installing the resin part at the member to be engaged at a time when the expanding-and-contracting portion is in the withdrawn state; and
an engaging step of varying, to the engagement state, the expanding-and-contracting portion of the resin part which is installed at the member to be engaged.

20. (amended) A resin part engaging method according to claim 16, wherein the flow out step is a pressure reducing step of reducing pressure within the hollow portion by principles of spraying.

21. (amended) A resin part engaging method according to claim 16, wherein the flow in step is an atmospheric pressure restoring step which makes pressure within the hollow portion substantially atmospheric pressure.

22. (amended) A resin part engaging structure for engaging, to a member to be engaged, a resin part having an engaging portion which is engageable with the member to be engaged, the engaging portion having at least one expanding-and-contracting portion, and due to the expanding-and-contracting portion expanding and contracting, the expanding-and-contracting portion varying between an engagement state which is a state in which the engaging member is engageable with the member to be engaged, and a withdrawn state which is a state in which the engaging member is not engageable with the member to be engaged, and the expanding-and-contracting portion including a hollow portion, wherein the expanding-and-contracting portion is varied to the withdrawn state due to fluid within the hollow portion flowing out from a communicating hole which communicates the hollow portion and an exterior, and after installation to the member to be engaged, the expanding-and-contracting portion is varied to the engagement state due to fluid flowing into the hollow portion, and is engaged to the member to be engaged.

23. (added) A resin part according to claim 1, wherein the communicating hole is a communicating hole which can be connected to and separated from a device for making fluid flow into the hollow portion.
